**Europäisches Patentamt**

**European Patent Office**

**Office européen des brevets**

(19)

(11) **EP 1 124 130 A2**

(12) ## EUROPÄISCHE PATENTANMELDUNG

(43) Veröffentlichungstag:
**16.08.2001 Patentblatt 2001/33**

(51) Int Cl.⁷: **G01N 27/12**

(21) Anmeldenummer: **01102978.2**

(22) Anmeldetag: **08.02.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.02.2000 DE 10006238**

(71) Anmelder: **SIEMENS AKTIENGESELLSCHAFT**
**80333 München (DE)**

(72) Erfinder:
- **Fleischer, Maximilian, Dr.**
  **85635 Höhenkirchen (DE)**
- **Meixner, Hans, Prof.**
  **85540 Haar (DE)**
- **Ostrick, Bernhard**
  **81541 München (DE)**
- **Pohle, Roland, Dr.**
  **85570 Herdweg (DE)**
- **Elfriede, simon, Dr.**
  **80639 München (DE)**

(54) **Halbleitergassensor mit Puffersystem**

(57) Die vorliegende Erfindung betrifft einen Halbleitergassensor, woran im Betrieb Wasser adsorbierbar ist, mit einer gassensitiven Schicht, mittels welcher ein elektrisches Gasdetektionssignal in Abhängigkeit von einem Gas, auf welches die gas-sensitive Schicht empfindlich ist, erzeugbar ist. Hierbei kann es sich z.B. um einen bei Zimmertemperatur betreibbaren Halbleitergassensor handeln. Es wird vorgeschlagen, daß die gassensitive Schicht ein Puffermittel aufweist, um so ein von pH-Wertänderungen adsorbierten Wassers unverfälschtes elektrisches Gasdetektionssignal zu erhalten.

FIG 1

EP 1 124 130 A2

**Beschreibung**

Die vorliegende Erfindung betrifft den Oberbegriff des unabhängigen Anspruches und befaßt sich damit allgemein mit der Messung von Gasen mittels Sensoren. Es ist wünschenswert, Gassensoren ohne oder mit allenfalls geringer Erwärmung zu betreiben, insbesondere bei Raumtemperatur. Dies ermöglicht einerseits die Verwendung von Halbleitergassensoren in Siliziumtechnologie und verringert andererseits den zum Betrieb der Sensoren erforderlichen Energiebedarf.

Der Betrieb eines Halbleiter-Gassensoren bei nur mäßiger Wärme, wie z.B. bei Raumtemperatur, führt jedoch typisch dazu, daß sich der sensitiven Schicht oder anderen Teilen des Sensors Wasser anlagert, und zwar typisch in Dicken von 1 bis 30 Monolagen. Dies kann sich störend auswirken, weil die zu messenden oder andere Gase zu einer pH-Wert-Änderung des adsorbierten Wassers führen können und dadurch das Signal des Sensors entweder direkt durch die pH-Änderung oder indirekt durch geänderte Gas-Reaktionen ungünstig beeinflußt wird.

Eine solche pH-Wert-Änderung kann sich nun auf verschiedene Weise auf die Messung des zu detektierenden Gases auswirken. Wie genau eine solche Beeinflussung aussieht, ist dabei abhängig von der Art des Sensors und/oder dem zu messenden Gas. So kann einerseits die Säure-Base-Reaktion im Halbleitergassensor den meßbaren Effekt in gewünschter Weise selbst bewirken. In einem solchen Fall stören lediglich die durch andere im zu untersuchenden Gas vorhandenen Fremdgase sich ergebenden Verschiebungen die eigentlichen Messungen. Es ist dabei aber insbesondere erwünscht, daß die anderen Gase allenfalls geringe Auswirkungen auf das Meßsignal besitzen. Dies ist vor allem dann nicht mehr der Fall, wenn aufgrund sehr hoher, aber wechselnder Konzentrationen an störenden Fremdgasen eine Empfindlichkeitsänderung des Sensors, etwa durch Alterung, Verschiebung interner Potentiale oder ähnliches auftritt. Eine Empfindlichkeitsänderung kann insbesondere bei der Verwendung von Gassensoren auftreten, bei der die sensitive Schicht Enzyme und dergleichen enthält, deren Reaktionen abhängig vom pH-Wert unterschiedlich schnell ablaufen. Weiter kann es zu Empfindlichkeitsänderungen kommen, weil der Übertritt des zu messenden Gases in die sensitive Schicht begünstigt und/oder, je nach Sensor, beeinträchtigt wird.

In Einzelfällen kann es durch pH-Wertveränderungen sogar zu Selbststörungen durch das zu messende Gas kommen, etwa dann, wenn Rückreaktionen von Gas und sensitiver Schicht pH-wertabhängig verlangsamt werden.

Die Aufgabe der vorliegenden Erfindung besteht darin, Neues für die gewerbliche Anwendung bereitzustellen und insbesondere Gassensoren, inbesondere Halbleitergassensoren zu verbessern, deren elektrische Eigenschaften mit Änderungen des pH-Wertes variieren.

Die Lösung dieser Aufgabe wird unabhängig beansprucht. Bevorzugte Ausführungsformen finden sich in den Unteransprüchen.

Ein Grundgedanke der Erfindung besteht somit darin, daß bei einem Halbleitergassensor, woran im Betrieb Wasser adsorbierbar ist, mit einer gassensitiven Schicht, mittels welcher ein elektrisches Gasdetektionssignal in Abhängigkeit von einem Gas, auf welches die gassensitive Schicht empfindlich ist, detektierbar ist, vorgesehen ist, daß die gassensitive Schicht ein Puffermittel aufweist, um so ein von pH-Wertänderungen adsorbierten Wassers unverfälschtes elektrisches Gasdetektionssignal zu erhalten.

Es wird also erfindungsgemäß die Verwendbarkeit eines Gassensors verbessert, indem der pH-Wert auf bestimmte Weise stabilisiert wird. Dabei wurde von der Erkenntnis ausgegangen, daß, obwohl die Menge adsorbierten Wassers relativ gering sein kann, dennoch beachtliche Probleme und meßtechnische Verfälschungen daraus resultieren können. Es wurde erkannt, daß sich diese Probleme, obwohl sie in der Ausgestaltung stark vo tatsächlichen Sensortyp, dem zu messenden Gas usw. abhängen, leicht lösen lassen, indem die gassensitive Schicht mit einem Puffermittel gebildet wird. Dabei stellt sich die Feuchtigkeit des Halbleitersensors nicht mehr als nachteilige, weil pH-Wertschwankungen unterworfene, sondern als positive Eigenschaft dar, die dazu beiträgt, die Messwerte zu stabilisieren, indem das für das Puffersystem erforderliche Wasser bereitgestellt wird.

Bei dem Gassensor kann es sich um einen resistiven, kapazitiven und/oder potentialgesteuerten Halbleitergassensor handeln, etwa um einen Sensor mit FET- oder Diodenstruktur. Alternativ kann es sich auch um einen massesensitiven Sensor handeln, bei dem eine unter Massebelegung durch das zu messende Gas sich ändernde Resonanzfrequenz eines schwingenden Teils erfaßt wird. Dies kann insbesondere mit einer Quarzmikrowaage und/oder einem Oberflächenwellenfilter geschehen.

Es ist besonders bevorzugt, wenn der Halbleitergassensor bei Temperaturen unter 100°C, insbesondere bei Raumtemperatur benutzt wird und, dementsprechend, etwa durch das Weglassen einer Sensor-Heizstruktur und dergl., auch für die Benutzung in diesem Temperaturbereich ausgelegt ist. Das Wasser wird bevorzugt nur in einer Dicke von 1 bis 30 Monolagen adsorbiert sein, was bei geringer Temperatur problemfrei möglich ist.

In einer ersten bevorzugten Variante weist das Puffermittel einen anorganischen Puffer auf, insbesondere auf Grundlage eines Karbonat-, Phosphat-, Chlorat-, Iodat- oder Boratsystems. Die Verwendung eines anorganischen Puffers hat in der Regel den Vorteil leichter Verarbeitbarkeit in der Herstellung des Sensors.

In einer weiteren bevorzugten Variante weist das Puffermittel einen organischen Puffer auf, wodurch das Einsatzspektrum der Gassensoren für unterschiedliche Gase und dementsprechend für die Bestimmung unterschiedlicher pH-Werte verbessert werden kann. Es können hierbei insbesondere Puffermittel auf Grundlage eines Acetat- oder Citratsystems und/oder einer puffernden Indikatorsubstanz, insbesondere Alizarin, Bromocresol, Brilliantgelb, Claytongelb, Kongorot, Malachitgrün verwendet werden.

Besonders vorteilhaft ist, wenn das Puffermittel ein Puffersystem umfaßt, in welchem eine Komponente durch und/oder mit dem zu messenden Gas gebildet ist. Dabei kann z.B. zur Messung von Kohlendioxid ein Puffersystem vorgesehen werden, welches zumindest eine der Kombinationen $H_2CO_3$/ $HCO_3^-$ oder $HCO_3^-$/ $CO_3^{2-}$ umfaßt; zur Messung von Ammoniak kann ein $NH_4^+$/$NH_3$-System und zur Messung von Blausäuregas ein $CN^-$/$HCN$-System eingesetzt werden; für Stickoxidmessungen können Puffer verwendet werden, die ein Nitrat und/oder Nitrit umfassen. Die Verwendung von Puffersystem, in welchem das Puffersystem eine Lösung des geeigneten Gases umfaßt, ist besonders vorteilhaft bei potentialgesteuerten Sensoren, wobei der pKs-Wert des gezeigten Puffersystems den pH-Wert in der Sensorschicht bei Abwesenheit des zu messenden Gases bestimmt. Es können dann die zu bestimmenden Gase über die Änderung des Potentials in Abhängigkeit vom pH bestimmt werden. Der funktionale Zusammenhang zwischen dem Potentialsprung $\Delta\Phi$ und der pH-Wertδnderung kann abgeschätzt werden nach

$$\Delta\Phi = -2,3 \text{ kT } \Delta\text{pH},$$

wobei kT die Bolzmann-Kostante ist und $\Delta\Phi$ der Potentialsprung.

Das Puffermittel kann bevorzugt eine Komponente einer die sensitive Schicht aufbauenden Festkörpermischung realisieren, der sensitiven Schicht zugemischt oder als Dispersion auf die Oberfläche der sensitiven Schicht aufgebracht sein.

Es ist aber auch möglich, das Puffermittel durch eine Oberflächenmodifizierung zumindest eines sensitiven Bestandteiles der sensitiven Schicht vorzusehen beziehungsweise einzubringen, wobei insbesondere eine Verbindung zu den Kristalliten einer granular aufgebauten sensitiven Schicht erfolgen kann. Wenn eine Verbindung des Puffermittels zum sensitiven Material oder seiner Komponenten erfolgen soll, kann dies durch Substratmodifizierung, insbesondere mittels Silanen, Thiolen und/oder funktionalisierten Alkylketten geschehen, mit welchen in der sensitiven Schicht Puffermoleküle verankert werden.

Es ist auch möglich, die sensitive Schicht mit Polymeren bzw. Oligomeren aufzubauen. Dabei kann das Puffersystem entweder alleine oder zusammen mit einem sensitiven Material in die Polymer-Matrix eingebettet sein. Die sensitive Schicht wird dann aus der Gesamtheit von Polymer beziehungsweise Oligomer, Puffer und sensitivem Material gebildet. Alternativ kann das Polymer eine das Puffersystem einbettende Matrix darstellen, die sensitives Material bindet.

Es ist bevorzugt, wenn das Polymer und/oder Oligomer hydrophil und/oder wasserlöslich ist, da dies die Einlagerung des Puffers in die Matrix begünstigt und überdies auch die Einstellung des pH-Wertes auf den gepufferten Wert positiv beeinflußt.

Der pH-Wert des gepufferten Systems kann verschiedenen Forderungen in Abhängigkeit von dem verwendeten Sensor angepaßt werden. Es ist einerseits möglich, den pH-Wert so zu wählen und zu fixieren, daß bestimmte Gasreaktionen beschleunigt ablaufen. So kann beispielsweise zur Verbesserung des Ansprechsverhaltens die Abhängigkeit der Gaslöslichkeit saurer Gase vom pH-Wert ausgenützt werden. Beispielsweise kann Kohlendioxid sehr viel schneller in Wasser gelöst werden, wenn der pH über 10 liegt. Durch die schnellere Löslichkeit kann zugleich das Gasansprechverhalten verbessert werden. Der pH-Wert kann auch eingestellt werden, um die Empfindlichkeit der sensitiven Schicht zu erhöhen. Beispielsweise sind bestimmte Enzyme, wie Glycoseoxidase bei einem pH-Wert von 7,0 besonders geeignet zur Sauerstoffdetektion. Der optimale pH-Wert beim Einsatz von Urease liegt hingegen bei 8,0.

Es kann auch der pH-Wert so eingestellt werden, daß die Rückreaktionen zwischen Gas und sensitiver Schicht beschleunigt werden, um die Reversibilität des Sensormaterials zu erhöhen. Damit kann einer temporären Vergiftung des Sensors durch zu hohe Konzentration des zu messenden Gases entgegen getreten werden.

Der pH-Wert kann auch fixiert werden, um aktive Zentren in den gassensitiven Schichten zu stabilisieren und damit die Alterung zu vermindern. So ist es möglich, etwa durch Einstellung eines bestimmten pH-Wertes die verschiedenen Oxidationsstufen des Eisens im Hämoglobin zu stabilisieren, was für die Kohlenmonoxidmessung von Bedeutung ist. Weiter können verschiedene reaktive Gruppen wie Sulfon-, Karbonsäure-, Thiol- beziehungsweise Aminogruppen stabilisiert werden.

Die Erfindung wird im folgenden nur beispielsweise anhand der Zeichnung beschrieben. In dieser zeigen die

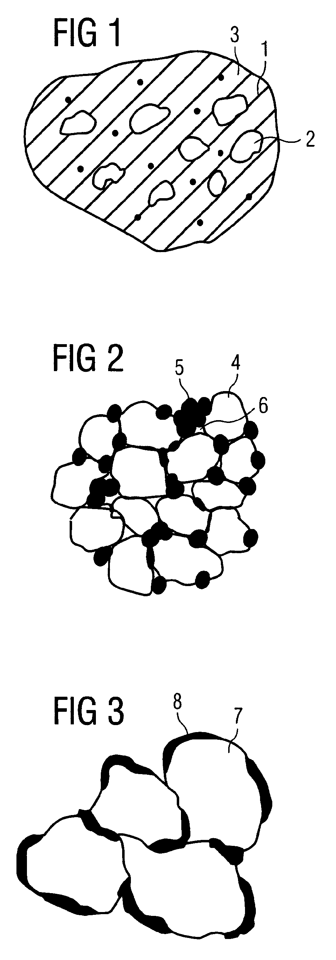

Fig. 1 bis 3        verschiedene sensitive Schichten mit einem Puffermittel.

Fig. 1 umfaßt eine sensitive Schicht eines an sich bekannten Sensors eine sensitive Schicht aus einer organischen Polymer-matrix 1, in welcher sensitives Material 2 in Form granularer Körner eingebaut ist und in welcher ein Puffersystem 3 eingebettet ist. Das Polymer der Polymermatrix ist hydrophil, so daß sich im Betrieb eines die sensitive Schicht enthaltenden Halbleitersensors bei Raumtemperatur anlagernde Wassermoleküle in die Polymermatrix eindringen können und dort zusammen mit dem Puffersystem einen zumindest nahezu konstanten, für die Messung des zu bestimmenden Gases besonders geeigneten pH-Wert vorsehen können.

Nach Fig. 2 ist eine sensitive Schicht aufgebaut aus einem Festkörpergemisch aus sensitivem Material 4 und einem Puffermittel 5, wobei zwischen den einzelnen Bestandteilen der sensitiven Schicht Gaskanäle 6 für den Gasaustausch verbleiben können. Durch den zumindest bereichsweisen Kontakt zwischen Puffersystem und sensitivem Material ergibt sich bei adsorbierter Wasserschicht auch an den sensitivem Material 4 der sensitiven Schicht ein nahezu konstanter pH-Wert wie erforderlich.

Nach Fig. 3 ist sensitives Material 7 durch Oberflächenmodifikation mit einem Puffersystem 8 versehen, um so gleichfalls im Betrieb bei Raumtemperatur den pH-Wert zu stabilisieren.

**Patentansprüche**

1. Gassensor, woran im Betrieb Wasser adsorbierbar ist, mit einer gassensitiven Schicht, mittels welcher ein elektrisches Gasdetektionssignal in Abhängigkeit von einem Gas, auf welches die gassensitive Schicht empfindlich ist, detektierbar ist, dadurch gekennzeichnet, daß die gassensitive Schicht ein Puffermittel aufweist, um so ein von pH-Wertänderungen adsorbierten Wassers unverfälschtes elektrisches Gasdetektionssignal zu erhalten.

2. Halbleitergassensor nach dem vorhergehenden Anspruch, dadurch gekennzeichnet, daß er einen sich in Abhängigkeit von dem zu messenden Gas meßbar ändernden Widerstand und/oder eine sich in Abhängigkeit von dem Gas meßbar ändernde Kapazität aufweist.

3. Halbleitergassensor nach einem der vorhergehenden Ansprüche, dadurch gekennzeichnet, daß es sich um einen potentialgesteuerten Halbleitergassensor handelt, der insbesondere mehrere Schichten und/oder Bereiche aufweist, deren interne Potentiale sich in Abhängigkeit von dem zu messenden Gas meßbar ändern.

4. Gassensor nach einem der vorhergehenden Ansprüche, dadurch gekennzeichnet, daß es sich um einen massesensitiven Gassensor handelt, insbesondere einen massesensitiven Gassensor, der insbesondere eine Quarzmikrowaage und/oder einen Oberflächenwellenfilter umfaßt.

5. Halbleitergassensor nach einem der vorhergehenden Ansprüche, dadurch gekennzeichnet, daß er für die Benutzung bei Temperaturen unter 100°C, insbesondere bei Raumtemperatur ausgelegt ist.

6. Halbleitergassensor nach einem der vorhergehenden Ansprüche, dadurch gekennzeichnet, daß im Betrieb Wasser in einer Dicke von 1 bis 30 Monolagen adsorbierbar ist.

7. Halbleitergassensor nach einem der vorhergehenden Ansprüche, dadurch gekennzeichnet, daß das Puffermittel einen anorganischen Puffer aufweist, insbesondere auf Grundlage eines Karbonat-, Phosphat-, Chlorat-, Iodat- oder Boratsystems.

8. Halbleitergassensor nach einem der vorhergehenden Ansprüche, dadurch gekennzeichnet, daß das Puffermittel einen organischen Puffer aufweist, insbesondere auf auf Grundlage eines Acetat- oder Citratsystems und/oder einer puffernden Indikatorsubstanz, insbesondere Alizarin, Bromocresol, Brilliantgelb, Claytongelb, Kongorot, Malachitgrün.

9. Halbleitergassensor nach einem der vorhergehenden Ansprüche, dadurch gekennzeichnet, daß das Puffermittel ein Puffersystem umfaßt, in welchem eine Komponente durch und/oder mit dem zu messenden Gas gebildet ist.

10. Gassensor nach dem vorhergehenden Anspruch, dadurch gekennzeichnet, daß das Puffermittel ein Puffersystem umfaßt, das durch zumindest eine der Kombinationen $H_2CO_3$/ $HCO_3^-$; $HCO_3^-$/ $CO_3^{2-}$; $NH_4^+$/$NH_3$; Stickoxidsalz/Stickstoffoxid, insbesondere Nitrate und/oder Nitrit/$NO_2$; Sulfate und/oder Sulfite / Schwefeldioxid gebildet ist.

11. Gassensor nach einem der vorhergehenden Ansprüche, dadurch gekennzeichnet, daß das Puffermittel oder dessen Komponenten durch zumindest eine Komponente einer die sensitive Schicht aufbauenden Festkörpermischung realisiert ist.

12. Gassensor nach einem der vorhergehenden Ansprüche, dadurch gekennzeichnet, daß das Puffermittel oder dessen Komponenten der sensitiven Schicht zugemischt oder als Dispersion auf die Oberfläche der sensitiven Schicht aufgebracht ist.

13. Gassensor nach einem der vorhergehenden Ansprüche, dadurch gekennzeichnet, daß das Puffermittel durch eine Oberflächenmodifizierung zumindest eines sensitiven Bestandteiles der sensitiven Schicht, insbesondere der Kristallite einer granular aufgebauten sensitiven Schicht, realisiert ist.

14. Gassensor nach einem der vorhergehenden Ansprüche, dadurch gekennzeichnet, daß das Puffermittel durch Substratmodifizierung insbesondere mittels Silanen, Thiolen und/oder funktionalisierten Alkylketten in der sensitiven Schicht verankerte Puffermoleküle aufweist.

**15.** Gassensor nach einem der vorhergehenden Ansprüche, dadurch gekennzeichnet, daß das Puffermittel Bestandteil einer Polymer- und/oder Oligomermatrix ist.

**16.** Gassensor nach dem vorhergehenden Anspruch, dadurch gekennzeichnet, daß das Polymer und/oder Oligomer wasserlöslich und/oder hydrophil ist, um so die Puffereinlagerung in der Matrix zu begünstigen.

**17.** Gassensor nach einem der vorhergehenden Ansprüche, dadurch gekennzeichnet, daß das Puffermittel dazu ausgebildet ist, dem adsorbierten Wasser einen solchen pH-Wert zu verleihen, daß der Übertritt des zu messenden Gases in das Wasser und/oder die sensitive Schicht begünstigt wird.

**18.** Halbleitergassensor nach einem der vorhergehenden Ansprüche, dadurch gekennzeichnet, daß das Puffermittel dazu ausgebildet ist, dem adsorbierten Wasser einen solchen pH-Wert zu verleihen, daß das zu messende Gases aus dem Wasser und/oder der sensitiven Schicht leichter in die Gasphase zurückgelangt.

**19.** Halbleitergassensor nach einem der vorhergehenden Ansprüche, dadurch gekennzeichnet, daß das Puffermittel dazu ausgebildet ist, dem adsorbierten Wasser einen solchen pH-Wert zu verleihen, der die sensitive Schicht insbesondere gegen Alterung und/oder Drift stabilisiert.

FIG 1

FIG 2

FIG 3